# EUROPÄISCHE PATENTSCHRIFT

(11) **EP 3 870 411 B1**
(45) Veröffentlichungstag und Bekanntmachung des Hinweises auf die Patenterteilung: **15.05.2024**
(21) Anmeldenummer: 19817581.2
(22) Anmeldetag: 21.10.2019
(51) Int. Cl.: B25J 17/02, B25J 19/06, B25J 9/12, F16D 3/50

(54) **ELASTISCHES GELENK**
ELASTIC JOINT
ARTICULATION ÉLASTIQUE

(30) Priorität: 22.10.2018 DE 102018008378
(43) Veröffentlichungstag der Anmeldung: 01.09.2021
(73) Patentinhaber: Technische Universität Chemnitz, 09111 Chemnitz (DE)
(72) Erfinder: ZHU, Hongxi, 09126 Chemnitz (DE); THOMAS, Ulrike, 09112 Chemnitz (DE)
(74) Vertreter: Kailuweit & Uhlemann Patentanwälte Partnerschaft mbB
(86) Internationale Anmeldenummer: PCT/DE2019/000278
(87) Internationale Veröffentlichungsnummer: WO 2020/083417

(56) Entgegenhaltungen:
- EP-A1- 2 619 469
- EP-B1- 2 619 469
- WO-A1-2017/180968
- CN-A- 103 846 930
- NIKOS G TSAGARAKIS ET AL: "A new variable stiffness actuator (CompAct-VSA): Design and modelling", INTELLIGENT ROBOTS AND SYSTEMS (IROS), 2011 IEEE/RSJ INTERNATIONAL CONFERENCE ON, IEEE, 25. September 2011 (2011-09-25), Seiten 378-383, XP032201203, DOI: 10.1109/IROS.2011.6095006 ISBN: 978-1-61284-454-1

## Beschreibung

Die Erfindung betrifft elastische Gelenke mit einem Antrieb, einem elastischen Mechanismus und einem Abtrieb.

Durch die Druckschrift DE 10 2012 214 094 B3 ist ein Roboter-Gelenksystem mit zwei Gelenkeinrichtungen mit jeweils einem Gelenk, zwei Antriebsmotoren, einer Energiespeichereinrichtung und einer Zusatz-Energiespeichereinrichtung bekannt. Mit der Zusatz-Energiespeichereinrichtung zwischen den beiden Gelenkeinrichtungen kann eine Energieübertragung von einer Gelenkeinrichtung auf die andere und somit von einem Gelenk auf das andere erfolgen. Das Roboter-Gelenksystem ist nur mit einem nicht unerheblichen Aufwand zu realisieren. Insbesonder sind vier Antriebsmotoren erforderlich.

Die Druckschrift DE 10 2006 016 958 A1 offenbart eine antagonistische Schwenkvorrichtung. Diese weist ein um eine Schwenksachse schwenkbares Gelenkelement auf, welches über zwei Kraftübertragungseinrichtungen mit zwei Antriebseinrichtungen verbunden ist. In beide Kraftübertragungseinrichtungen ist eine passiv wirkende Steifigkeits-Einstelleinrichtung integriert, die nicht einstellbar ist.

Die Druckschrift DE 10 2016 226 174 A1 beinhaltet einen nichtlinearen Schwingungsmechanismus mit mehreren starren Elementen, wobei einzelne Segmente über ein Gelenk insbesondere ein Drehgelenk miteinander verbunden sind. Zwischen den Segmenten sind zur Kraft- und/oder Bewegungsübertragung jeweils ein Schwingungselement vorgesehen. Durch die Summe der zusammenwirkenden Schwingungselemente ist ein nichtlineares Schwingungsverhalten vorhanden, ohne dass ein Stellglied notwendig ist. Eine Einstellung des nichtlinearen Schwingungsverhaltens ist nicht vorgesehen.

Durch die Druckschrift EP 2 006 055 B1 ist ein elastisches Gelenk für einen Roboter-Manipulator bekannt, dessen Steifigkeit durch eine Kurvenscheibe nichtlinear mit der Verdrehung verknüpft ist. Eine variable Steifigkeit ist nicht gegeben.

Aus der WO 2012/038931 A ist ein steifigkeitsverstellbares Drehgelenk bekannt, wobei eine Übertragung des Drehmoments zwischen einem Eingangselement und einem Ausgangselement über ein Zwischenelement erfolgt. Das Zwischenelement stellt einen Hebel dar, dessen Pivot mittels eines Aktuators veränderbar ist. Damit kann die Steifheit des Drehgelenks verändert werden. In dem Drehgelenk wird die Steifheit nicht durch Ändern der Vorspannung oder der Position der Federn geändert, sondern durch Ändern der elastischen Kraft, die von den elastischen Mitteln aufgrund eines Mechanismus mit einem einstellbaren Hebelverhältnis ausgeübt wird. Mittels des Drehgelenks kann nur dessen Steifheit verändert werden. Die EP 2 619 469 A1 betrifft das steifigkeitsverstellbare Drehgelenk der WO 2012/038931 A1.

Der im Patentanspruch 1 angegebenen Erfindung liegt die Aufgabe zugrunde, ein elastisches Gelenk mit variabler Steifigkeit zu schaffen.

Diese Aufgabe wird mit den im Patentanspruch 1 aufgeführten Merkmalen gelöst. Vorteilhafte Weiterbildungen sind in den rückbezogenen Unteransprüchen offenbart.

Die elastischen Gelenke mit einem Antrieb, einem elastischen Mechanismus und einem Abtrieb zeichnen sich insbesondere durch eine variable Steifigkeit aus.

Dazu weist der elastische Mechanismus einen Kurvenscheibenmechanismus und einen Hebelmechanismus auf. Der Antrieb ist mit dem Kurvenscheibenmechanismus verbunden, wobei durch Drehung einer Kurvenscheibe in Verbindung mit wenigstens einem Federelement das Drehmoment nichtlinear veränderbar ist. Die Kurvenscheibe ist mit dem Hebelmechanismus verbunden, wobei ein erster Hebelarm eines Hebels mit der Kurvenscheibe außerhalb ihres Mittelpunkts drehbar verbunden ist, ein zweiter Hebelarm des Hebels mit dem Abtrieb verbunden ist und ein Pivot des Hebels an einen Verstellmechanismus zur Veränderung der Position des Pivot und damit zur Steifigkeit gekoppelt ist.

Das elastische Gelenk ist damit vorteilhafterweise ein nichtlineares elastisches Gelenk mit variabler Steifigkeit. Das so elastische und damit nachgiebige Gelenk stellt eine Kombination aus einer Kurvenscheibentechnik und einer Hebeltechnik dar, um das nichtlineare elastische Gelenk mit variabler Steifigkeit zu realisieren. Eine Bewegung eines an den Abtrieb gekoppelten Gliedes erfolgt über das nichtlineare elastische Gelenk mit variabler Steifigkeit. Die Steifigkeit wird mittels des mit den Pivot des Hebelmechanismus verbundenen Stellmechanismus eingestellt. Um einen progressiven nichtlinearen Drehmomentverlauf zu gewährleisten, ist der Kurvenscheibenmechanismus vorhanden. Durch Drehung der Kurvenscheibe wird ein nichtlinearer Drehmomentverlauf realisiert. Die hier wirkende Steifigkeit wird über die Federelemente verwirklicht.

Mit dem Hebelmechanismus im elastischen Mechanismus sind progressive nichtlineare Winkel-Drehmoment-Eigenschaften realisiert. Weiterhin ist damit das benötigte Drehmoment für die Einstellung der Steifigkeit klein.

Damit eignet sich vorteilhafterweise für Roboter. Mit steuerbaren Steifigkeiten kann eine sichere Mensch-Roboter-Interaktion gewährleistet werden. Gleichzeitig können im Kontakt je nach Anforderung hinreichend hohe Kontaktkräfte aufgebracht werden. Damit werden Roboter sicherer und können beispielsweise verschiedene Montageaufgaben oder körperlich schwere Aufgaben im Servicebereich erfüllen.

Die Kurvenscheibe besitzt zwei sich gegenüberliegende Ausschnitte mit jeweils einer Kurve mit nach innen weisenden Kante. Die Kurve kann eine Freiformkurve, wie beispielsweise eine Bézierkurve oder eine mit einer Spline-Funktion beschriebene Kurve, oder die Form eines Bogens mit einer Form eines Kegelschnitts oder wenigstens einer Kombination von Kegelschnitten sein. Damit sind die verschiedensten Winkel-Drehmoment-Eigenschaften realisierbar.

Jeweils wenigstens ein Federelement greift über eine Rolle an die Kante des Ausschnitts der Kurvenscheibe an.

Jeweils zwei parallel beabstandet zueinander angeordnete Federelemente sind nach einer Weiterbildung über eine Endenverbindung der Federelemente miteinander verbunden. Weiterhin weist die Endenverbindung die Rolle auf, so dass sich der Mittelpunkt der Rolle im verlängerten Zwischenraum der Federelemente befindet. Damit wirken die vier Federelemente für die Drehung in beide Richtungen, so dass das elastische Gelenk hohe Drehmomente erzeugen kann. Gleichzeitig sind die
Endenverbindungen Schieber.

Der Antrieb ist nach einer Weiterbildung über das wenigstens eine Federelement und die Rolle mit der Kurvenscheibe verbunden. Damit ist vorteilhafterweise der Kurvenscheibenmechanismus realisiert, der einen progressiven nichtlinearen Drehmomentverlauf gewährleistet. Durch Drehung der Kurvenscheibe ist ein nichtlinearer Drehmomentverlauf vorhanden. Die Steifigkeit wird über die Federelemente realisiert.

Der Antrieb ist nach einer Weiterbildung mit der Kurvenscheibe verbunden.

Der Verstellmechanismus ist nach einer Weiterbildung eine Gewindespindel-Bewegungsmutter-Lineareinheit. Eine derartige Einheit ist vorteilhafterweise selbst hemmend, so dass nur bei angetriebener Gewindespindel die Position des Pivot verändert wird. Der Pivot des Hebels ist in dieser Ausführungsform an einen linearen Verstellmechanismus zur Veränderung der Steifigkeit gekoppelt.

Die Gewindespindel ist nach einer Weiterbildung der Gewindespindel-Bewegungsmutter-Lineareinheit mit einem Stellantrieb verbunden. Das kann insbesondere ein Elektromotor sein.

Der Abtrieb ist nach einer Weiterbildung eine drehbare Scheibe in Verbindung mit dem zweiten Hebelarm. Damit kann ein kompaktes elastisches Gelenk realisiert werden.

Die Kurvenscheibe, der Hebel, der Verstellmechanismus und die Scheibe sind nach einer Weiterbildung nacheinander und beabstandet zueinander angeordnet.

Die Scheibe ist nach einer Weiterbildung ein Träger eines Gliedes eines Roboters.

Ein Ausführungsbeispiel der Erfindung ist in den Zeichnungen jeweils prinzipiell dargestellt und wird im Folgenden näher beschrieben.

Es zeigen:
- Fig. 1: ein elastisches Gelenk,
- Fig. 2: ein Kurvenscheibenmechanismus,
- Fig. 3: ein Kurvenscheibenmechanismus und ein Hebelmechanismus,
- Fig. 4: ein gedrehter Kurvenscheibenmechanismus mit einem gedrehten Hebelmechanismus und
- Fig. 5: ein elastisches Gelenk mit einem Verstellmechanismus des Pivot.

Ein elastisches Gelenk besteht im Wesentlichen aus einem Antrieb 1, einem elastischen Mechanismus 2 und einem Abtrieb 3.

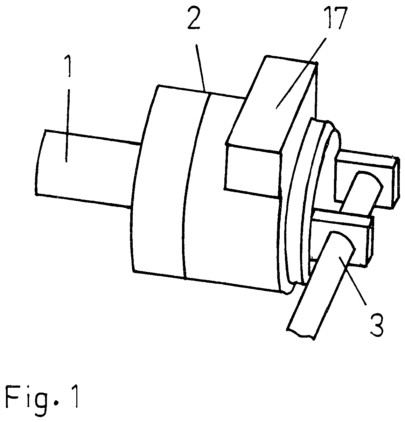

Die Fig. 1 zeigt ein elastisches Gelenk in einer prinzipiellen Darstellung.

Der elastische Mechanismus 2 besitzt einen Kurvenscheibenmechanismus 4 und einen Hebelmechanismus 5.

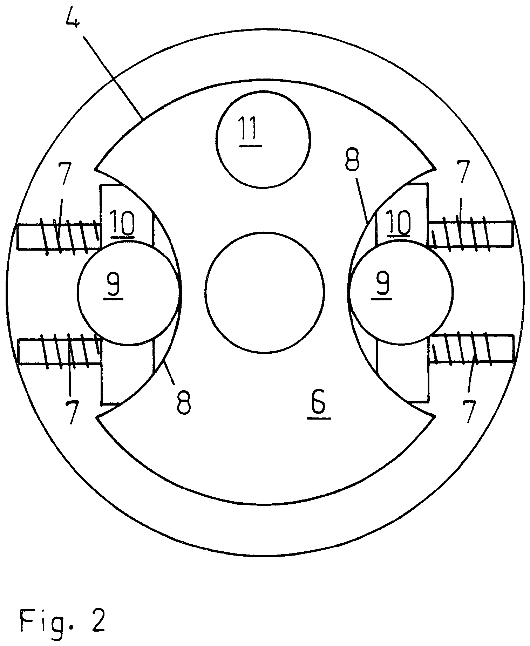

Die Fig. 2 zeigt einen Kurvenscheibenmechanismus 4 des elastischen Mechanismus 2 in einer prinzipiellen Darstellung.

Der Antrieb 1 ist mit dem Kurvenscheibenmechanismus 4 verbunden, wobei durch Drehung einer Kurvenscheibe 6 in Verbindung mit wenigstens einem Federelement 7 das Drehmoment nichtlinear veränderbar ist. Dazu besitzt die Kurvenscheibe 6 zwei sich gegenüberliegende Ausschnitte mit jeweils einer Kurve mit nach innen weisenden Kante 8. Die Kurve kann eine Freiformkurve, wie eine Bézierkurve oder eine mit einer Spline-Funktion beschriebene Kurve, oder die Form eines Bogens mit einer Form eines Kegelschnitts oder wenigstens einer Kombination von Kegelschnitten sein. Die Federelemente 7 greifen jeweils über eine Rolle 9 an die Kante 8 des Ausschnitts der Kurvenscheibe 6 an. Dabei können jeweils zwei parallel beabstandet zueinander angeordnete Federelemente 7 über eine Endenverbindung 10 der Federelemente 7 miteinander verbunden sein. Die Endenverbindungen 10 weisen als Schieber 10 jeweils eine Rolle 9 auf, so dass sich der Mittelpunkt der Rolle 9 im verlängerten Zwischenraum der Federelemente 7 befindet. Der Antrieb 1 ist über die Federelemente 7 und die Rollen 9 mit der Kurvenscheibe 6 verbunden. Außerhalb des Mittelpunkts der Kurvenscheibe 6 befindet sich ein Verbindungselement 11 zum Hebelmechanismus 5.

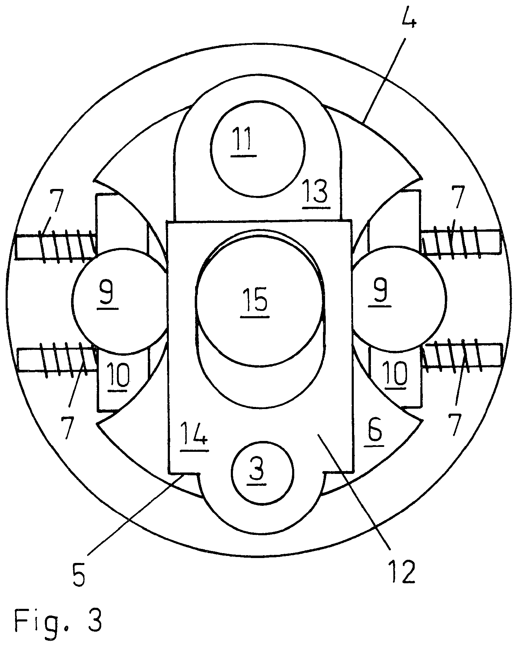

Die Fig. 3 zeigt einen Kurvenscheibenmechanismus und einen Hebelmechanismus in einer prinzipiellen Darstellung.

Die Kurvenscheibe 6 ist über das Verbindungselement 11 mit dem Hebelmechanismus 5 verbunden, wobei das Verbindungselement 11 ein Zapfen 11 sein kann. Ein erster Hebelarm 13 eines Hebels 12 ist über das Verbindungselement 11 drehbar mit der Kurvenscheibe 6 außerhalb ihres Mittelpunkts verbunden. Ein zweiter Hebelarm 14 des Hebels 12 ist mit dem Abtrieb 3 verbunden, der dazu als Hebelzapfen ausgebildet sein kann.

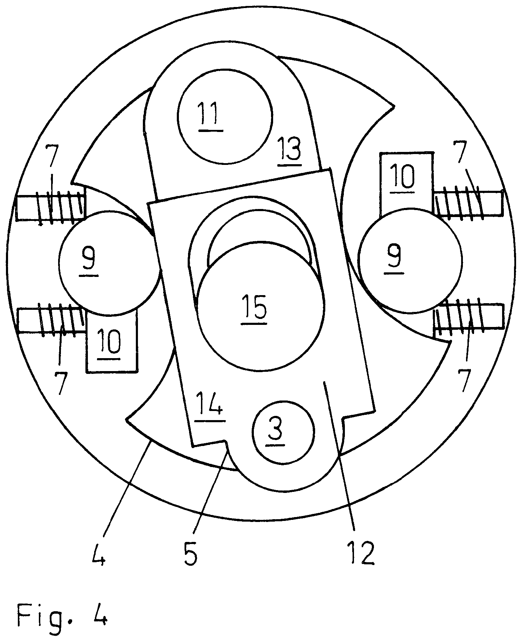

Die Fig. 4 zeigt einen gedrehten Kurvenscheibenmechanismus 4 mit einem gedrehten Hebelmechanismus 5 in einer prinzipiellen Darstellung.

Der Pivot 15 des Hebels 12 ist an einen Verstellmechanismus 16 zur Veränderung der Position des Pivot 15 und damit zur Änderung der Steifigkeit gekoppelt.

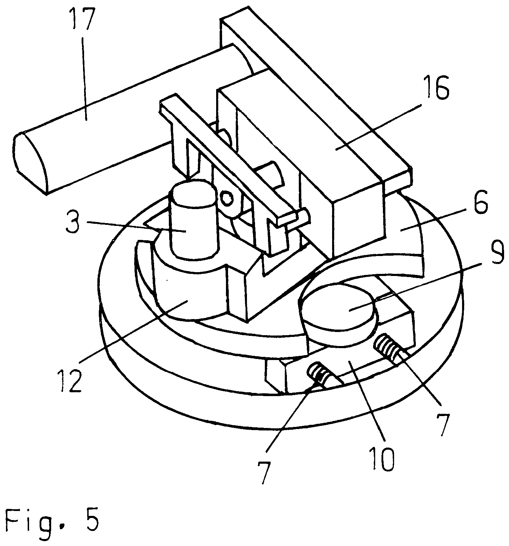

Die Fig. 5 zeigt ein elastisches Gelenk mit einem Verstellmechanismus 16 des Pivot 15 in einer prinzipiellen Darstellung.

Der Verstellmechanismus 16 kann insbesondere eine bekannte Gewindespindel-Bewegungsmutter-Lineareinheit sein, wobei die Gewindespindel mit einem Stellantrieb 17 verbunden ist.

Der Abtrieb 3 kann insbesondere als drehbare Scheibe ausgebildet sein, die über den Hebelzapfen mit dem zweiten Hebelarm 14 in Verbindung steht. Die Kurvenscheibe 6, der Hebel 12, der Verstellmechanismus 16 und die an den Hebelzapfen gekoppelte Scheibe können nacheinander und beabstandet zueinander angeordnet sein, so dass ein kompaktes elastisches Gelenk realisiert ist. Die Scheibe kann hierbei ein Träger eines Gliedes eines Roboters sein.

Der Antrieb 1 und der Stellantrieb 17 sind bekannte Elektromotoren.

## Patentansprüche

1. Elastisches Gelenk mit einem Antrieb (1), einem elastischen Mechanismus (2) und einem Abtrieb (3), wobei
der elastische Mechanismus (2) einen Kurvenscheibenmechanismus (4) mit Kurvenscheibe (6) und einen Hebelmechanismus (5) aufweist,
wobei durch Drehung der Kurvenscheibe (6) in Verbindung mit wenigstens einem Federelement (7) das Drehmoment nichtlinear veränderbar ist,
und
ein erster Hebelarm (13) eines Hebels (12) mit der Kurvenscheibe (6) außerhalb ihres Mittelpunkts drehbar verbunden ist, und
ein zweiter Hebelarm (14) des Hebels (12) mit dem Abtrieb (3) verbunden ist, und
der Pivot (15) des Hebels (12) an einen Verstellmechanismus (16) zur Veränderung der Position des Pivot (15) und damit der Steifigkeit gekoppelt ist,
**dadurch gekennzeichnet, dass**
die Kurvenscheibe (6) zwei sich gegenüberliegende Ausschnitte mit jeweils einer Kurve mit nach innen weisender Kante (8) besitzt,
und
die Kurvenscheibe (6) mit dem Hebelmechanismus (5) verbunden ist, und das wenigstens eine Federelement (7) über eine Rolle (9) an die Kante (8) wenigstens eines der Ausschnitte der Kurvenscheibe (6) angreift,
und
der Antrieb (1) über das wenigstens eine Federelement (7) und die Rolle (9) mit der Kurvenscheibe (4) verbunden ist.

2. Gelenk nach Patentanspruch 1, **dadurch gekennzeichnet, dass** jeweils zwei parallel beabstandet zueinander angeordnete Federelemente (7) über eine Endenverbindung (10) der Federelemente (7) miteinander verbunden sind und dass die Endenverbindung (10) die Rolle (9) aufweist, so dass sich der Mittelpunkt der Rolle (9) im verlängerten Zwischenraum der Federelemente (7) befindet.

3. Gelenk nach Patentanspruch 1, **dadurch gekennzeichnet, dass** der Verstellmechanismus (16) ein Gewindespindel-Bewegungsmutter-Lineareinheit ist.

4. Gelenk nach Patentanspruch 3, **dadurch gekennzeichnet, dass** die Gewindespindel mit einem Stellantrieb (17) verbunden ist.

5. Gelenk nach Patentanspruch 1, **dadurch gekennzeichnet, dass** der Abtrieb (3) eine drehbare Scheibe in Verbindung mit dem zweiten Hebelarm (14) ist.

6. Gelenk nach den Patentansprüchen 1 und 5, **dadurch gekennzeichnet, dass** die Kurvenscheibe (6), der Hebel (12), der Verstellmechanismus (16) und die Scheibe nacheinander und beabstandet zueinander angeordnet sind.

7. Gelenk nach Patentanspruch 5, **dadurch gekennzeichnet, dass** die Scheibe ein Träger eines Gliedes eines Roboters ist.

## Claims

1. Elastic joint with a drive (1), an elastic mechanism (2) and an output (3), wherein
the elastic mechanism (2) has a cam disc mechanism (4) with a cam disc (6) and a lever mechanism (5),
wherein the torque can be varied non-linearly by rotating the cam disc (6) in conjunction with at least one spring element (7),
and
a first lever arm (13) of a lever (12) is rotatably connected to the cam disc (6) outside its centre point, and
a second lever arm (14) of the lever (12) is connected to the output (3), and
the pivot (15) of the lever (12) is coupled to an adjustment mechanism (16) for changing the position of the pivot (15) and thus the rigidity,
**characterised in that**
the cam disc (6) has two opposing cut-outs, each with a curve with an inwardly pointing edge (8),
and
the cam disc (6) is connected to the lever mechanism (5), and the at least one spring element (7) engages the edge (8) of at least one of the cut-outs of the cam disc (6) via a roller (9),
and
the drive (1) is connected to the cam disc (4) via the at least one spring element (7) and the roller (9).

2. Joint according to claim 1, **characterised in that** two spring elements (7) arranged parallel to one another at a distance are connected to one another via an end connection (10) of the spring elements (7) and **in that** the end connection (10) has the roller (9), so that the centre of the roller (9) is located in the extended intermediate space of the spring elements (7).

3. Joint according to claim 1, **characterised in that** the adjustment mechanism (16) is a threaded spindle movement nut linear unit.

4. Joint according to claim 3, **characterised in that** the threaded spindle is connected to an actuator (17).

5. Joint according to claim 1, **characterised in that** the output (3) is a rotatable disc in conjunction with the second lever arm (14).

6. Joint according to claims 1 and 5, **characterised in that** the cam disc (6), the lever (12), the adjustment mechanism (16) and the disc are arranged one after the other and at a distance from one another.

7. Joint according to claim 5, **characterised in that** the disc is a carrier of a member of a robot.

## Revendications

1. Articulation élastique comprenant un entraînement d'entrée (1), un mécanisme élastique (2) et un entraînement de sortie (3), dans lequel
le mécanisme élastique (2) comporte un mécanisme à came (4) avec came (6) et un mécanisme à levier (5),
le moment de rotation pouvant être modifié de manière non linéaire par la rotation de la came (6) en liaison avec au moins un élément de ressort (7),
et
un premier bras de levier (13) d'un levier (12) est relié de manière rotative à la came (6) en dehors de son centre, et
un deuxième bras de levier (14) du levier (12) est relié à la sortie (3), et
le pivot (15) du levier (12) est couplé à un mécanisme de réglage (16) pour la modification de la position du pivot (15) et donc de la rigidité,
**caractérisé en ce que**
la came (6) possède deux découpes opposées l'une à l'autre, chacune courbe avec un bord (8) dirigé vers l'intérieur,
et
la came (6) est reliée au mécanisme à levier (5), et l'au moins un élément de ressort (7) agit sur le bord (8) d'au moins une des découpes de la came (6) par l'intermédiaire d'un rouleau (9),
et
l'entraînement d'entrée (1) est relié à la came (4) par l'intermédiaire de l'au moins un élément de ressort (7) et du rouleau (9).

2. Articulation selon la revendication 1, **caractérisée en ce que** respectivement deux éléments de ressort (7) disposés parallèlement à distance l'un de l'autre sont reliés entre eux par une liaison des extrémités (10) des éléments élastiques (7) et **en ce que** la liaison des extrémités (10) présente le rouleau (9), de sorte que le centre du rouleau (9) se trouve dans l'espace intermédiaire prolongé des éléments de ressort (7).

3. Articulation selon la revendication 1, **caractérisée en ce que** le mécanisme de réglage (16) est une unité linéaire à écrou de mouvement de broche filetée.

4. Articulation selon la revendication 3, **caractérisée en ce que** la broche filetée est reliée à un actionneur (17).

5. Articulation selon la revendication 1, **caractérisée en ce que** l'entraînement de sortie (3) est un disque rotatif en liaison avec le deuxième bras de levier (14).

6. Articulation selon les revendications 1 et 5, **caractérisée en ce que** la came (6), le levier (12), le mécanisme de réglage (16) et le disque sont disposés successivement et à distance les uns des autres.

7. Articulation selon la revendication 5, **caractérisée en ce que** le disque est un support d'un membre d'un robot.
